# EUROPEAN PATENT APPLICATION

(11) **EP 4 692 896 A1**
(43) Date of publication of application: **11.02.2026**
(21) Application number: 24802832.6
(22) Date of filing: 29.04.2024
(51) Int. Cl.: G02B 27/01, G02B 6/00, G02B 26/08

(54) **LIGHT FIELD NEAR-EYE DISPLAY ASSEMBLY, LIGHT FIELD NEAR-EYE DISPLAY APPARATUS, AND LIGHT FIELD NEAR-EYE DISPLAY METHOD**

(30) Priority: 09.05.2023 CN 202310520848
(71) Applicant: Sunny Optical (Zhejiang) Research Institute Co., Ltd., Hangzhou, Zhejiang 311200 (CN)
(72) Inventor: LU, Fei, Hangzhou, Zhejiang 311200 (CN); HAO, Xiying, Hangzhou, Zhejiang 311200 (CN); CHEN, Zhangmin, Hangzhou, Zhejiang 311200 (CN)
(74) Representative: Petraz, Gilberto Luigi
(86) International application number: PCT/CN2024/090518
(87) International publication number: WO 2024/230548

(57) **Abstract**

A light field near-eye display assembly, a light field near-eye display apparatus, and a light field near-eye display method are provided. The light field near-eye display assembly includes: a lighting assembly, configured to project an illumination beam; an MEMS scanning mirror, provided on a projection side of the lighting assembly and configured to deflect the illumination beam projected by the lighting assembly to adjust an incident angle of the illumination beam; a waveguide assembly, including an optical waveguide, and a coupling-in device and a coupling-out device provided on the optical waveguide; and a spatial light modulator, having the same refresh rate as the MEMS scanning mirror and configured to modulate the illumination beam deflected by the MEMS scanning mirror into image light at a corresponding viewing angle to propagate to the coupling-in device.

## Description

### CROSS-REFERENCE TO RELATED APPLICATION

This application claims priority to Chinese patent application No. 202310520848.6, filed on May 9, 2023, and titled "LIGHT FIELD NEAR-EYE DISPLAY ASSEMBLY, LIGHT FIELD NEAR-EYE DISPLAY APPARATUS, AND LIGHT FIELD NEAR-EYE DISPLAY METHOD". The content of the above identified application is hereby incorporated herein in its entirety by reference.

### TECHNICAL FIELD

The present invention relates to the field of near-eye display technologies, and in particular, to a light field near-eye display assembly, a light field near-eye display apparatus, and a light field near-eye display method.

### BACKGROUND

Waveguide-based augmented reality (AR) near-eye display is a mainstream and relatively mature technical solution for augmented reality near-eye display currently. Its primary principle is that an image source generated by a micro-projection optical machine enters a waveguide after passing through a collimating lens and a coupling-in device, is totally reflected in the waveguide to a coupling-out section, and is diffracted into human eyes through a coupling-out device. The waveguide-based near-eye display has advantages of small volume, lightness and thinness, large eye movement range and the like. However, since a virtual image of the waveguide is always at infinity, and 3D display effect is formed only relying on binocular disparity, a vergence angle and a focus depth of the human eyes consistently mismatch, which leads to the vergence-accommodation conflict, causing eye strain and visual fatigue.

According to the description of the related art, a solution proposed to address the vergence-accommodation conflict involves a small sized light field projector. This solution adopts a lighting assembly array and a spatial light modulator combined with a waveguide. It utilizes backlight incident from different angles to match the spatial light modulator to refresh images of different perspectives, thereby achieving a three-dimensional light field display. A main problem of this solution is the use of a reflective spatial light modulator located on an optical axis of a display path, which may obstruct a view of an actual scene, making it difficult to implement for the augmented reality near-eye display. Another solution provides a wearable device structure with a compact structure for light field near-eye display. Light emitted by a lighting assembly array enters a beam splitter through a waveguide, is reflected and then incident onto a spatial light modulator. The spatial light modulator refreshes images of different perspectives, which are then projected directly to a retina of the human eyes after multiple reflections. This solution integrates various components and technologies such as a lighting assembly array, a waveguide, a spatial light modulator, and a retinal projection, resulting an overly complex structure that is challenging to implement.

### SUMMARY

According to various embodiments of the present invention, a light field near-eye display assembly, a light field near-eye display apparatus, and a light field near-eye display method are provided.

In a first aspect, the present invention provides a light field near-eye display assembly. The light field near-eye display assembly includes a lighting assembly, a Micro-Electro-Mechanical System (MEMS) scanning mirror, a waveguide assembly, and a spatial light modulator.

The lighting assembly is configured to project an illumination beam.

The MEMS scanning mirror is provided on a projection side of the lighting assembly and configured to deflect the illumination beam projected by the lighting assembly to adjust an incident angle of the illumination beam.

The waveguide assembly includes an optical waveguide, and a coupling-in device and a coupling-out device provided on the optical waveguide.

The spatial light modulator has a same refresh rate as the MEMS scanning mirror. The spatial light modulator is provided in a light path between the MEMS scanning mirror and the coupling-in device and configured to modulate the illumination beam deflected by the MEMS scanning mirror into image light at a corresponding viewing angle to propagate to the coupling-in device.

In an embodiment, the coupling-out device includes a coupling-out grating provided on a side of the optical waveguide. The coupling-out grating includes a surface-relief grating, a reflective volume holographic grating, a reflective liquid crystal polarization grating, a transmissive volume holographic grating, or a transmissive liquid crystal polarization grating.

In an embodiment, the light field near-eye display assembly further includes an eyepiece provided in a coupling-out light path of the coupling-out grating.

In an embodiment, the coupling-out device includes a coupling-out lens provided on a side of the optical waveguide. The coupling-out lens includes a reflective volume off-axis holographic lens, a reflective off-axis liquid crystal lens, a transmissive volume off-axis holographic lens, or a transmissive off-axis liquid crystal lens.

In an embodiment, the spatial light modulator includes a reflective spatial light modulator provided on a side of the optical waveguide distal from the MEMS scanning mirror.

In an embodiment, the coupling-in device includes a reflective coupling-in grating provided on a side of the optical waveguide proximal to the MEMS scanning mirror, and the reflective coupling-in grating includes a reflective volume holographic grating or a reflective liquid crystal polarization grating.

In an embodiment, the spatial light modulator includes a transmissive spatial light modulator provided on a side of the optical waveguide proximal to the MEMS scanning mirror.

In an embodiment, the coupling-in device includes a transmissive coupling-in grating provided on a side of the optical waveguide proximal to the MEMS scanning mirror. The transmissive coupling-in grating includes a surface-relief grating, a transmissive volume holographic grating, or a transmissive liquid crystal polarization grating.

In an embodiment, the lighting assembly includes a light source and a collimator. The light source is configured to emit the illumination beam. The collimator is provided between the light source and the MEMS scanning mirror and configured to collimate the illumination beam emitted by the light source.

In an embodiment, the lighting assembly includes a first laser, a second laser, a third laser, a beam combiner, a first collimator, a second collimator, and a third collimator. The first laser is configured to emit red light. The second laser is configured to emit green light. The third laser is configured to emit blue light. The beam combiner is configured to combine the red light, the green light, and the blue light into a single illumination beam. The first collimator is provided in a light path between the first laser and the beam combiner. The second collimator is provided in a light path between the second laser and the beam combiner. The third collimator is provided in a light path between the third laser and the beam combiner.

In a second aspect, the present further provides a light field near-eye display apparatus. The light field near-eye display apparatus includes an apparatus body and the light field near-eye display assembly in any embodiment of the first aspect. The light field near-eye display assembly is mounted on the apparatus body.

In a third aspect, the present invention further provides a light field near-eye display method, including: projecting an illumination beam to a MEMS scanning mirror by a lighting assembly, deflecting the illumination beam to adjust an incident angle of the illumination beam by the MEMS scanning mirror, modulating the illumination beam deflected by the MEMS scanning mirror to generate image light at a corresponding viewing angle and projecting the image light to a coupling-in device by a spatial light modulator, coupling the image light into an optical waveguide by the coupling-in device, and transmitting the image light to a coupling-out device by the optical waveguide, and coupling the image light out of the optical waveguide and projecting the image light to human eyes by the coupling-out device so as to achieve a three-dimensional light field display.

Other features, purposes and advantages of the present invention will become apparent from details of one or more embodiments of the present invention presented in the attached drawings and descriptions below.

### BRIEF DESCRIPTION OF THE DRAWINGS

In order to illustrate the embodiments of the present invention or technical solutions in the related art more clearly, the drawings used in the illustration will be described briefly. Apparently, the following described drawings are merely for the embodiments of the present invention, and other drawings can be derived according to the disclosed drawings by those skilled in the art without any creative effort.
FIG. 1 illustrates a schematic structural diagram of a light field near-eye display assembly according to an embodiment of the present invention.
FIG. 2 illustrates a light path diagram when the light field near-eye display assembly includes a reflective spatial modulator, a reflective coupling-in grating, a coupling-out grating, and an eyepiece.
FIG. 3 illustrates a light path diagram when the light field near-eye display assembly includes a reflective spatial modulator, a reflective coupling-in grating, and a coupling-out lens.
FIG. 4 illustrates a light path diagram of the coupling-out grating and the eyepiece of the light field near-eye display assembly.
FIG. 5 illustrates a light path diagram of the coupling-out lens of the light field near-eye display assembly.
FIG. 6A illustrates a light path diagram of a first example of the light field near-eye display assembly.
FIG. 6B illustrates a light path diagram of a second example of the light field near-eye display assembly.
FIG. 6C illustrates a light path diagram of a third example of the light field near-eye display assembly.
FIG. 7 illustrates a light path diagram when the light field near-eye display assembly includes a transmissive spatial modulator, a transmissive coupling-in grating, a coupling-out grating, and an eyepiece.

List of reference numerals: 10 represents a light field near-eye display assembly, 11 represents a lighting assembly, 110 represents an illumination beam, 111 represents a light source, 112 represents a collimator, 12 represents a MEMS scanning mirror, 13 represents a spatial light modulator, 130 represents an image light, 131 represents a reflective spatial light modulator, 132 represents a transmissive spatial light modulator, 14 represents a waveguide assembly, 141 represents a coupling-in device, 1411 represents a reflective coupling-in grating, 1412 represents a transmissive coupling-in grating, 142 represents an optical waveguide, 143 represents a coupling device-out, 1431 represents a coupling-out grating, 1432 represents an eyepiece, 1433 represents a coupling-out lens, 20 represents human eyes.

### DETAILED DESCRIPTION

The technical solutions in the embodiments of the present invention will be clearly and completely described in connection with the accompanying drawings in the embodiments of the present invention. Apparently, the embodiments as described are merely some rather than all of the embodiments of the present invention. All other embodiments obtained by those skilled in the art based on the embodiments of the present invention without creative efforts shall fall within the protection scope of the present invention.

The following description is disclosed to enable those skilled in the art to implement the present invention. The alternative embodiments in the following description are merely examples, and other obvious modifications may occur to those skilled in the art. The general principles of the present invention defined in the following description may be applied to other embodiments, alternatives, modifications, equivalents, and other technical solutions without departing from the spirit and scope of the present invention.

It should be understood by those skilled in the art that, in the description of the present invention, orientations or positional relationships indicated by terms such as "longitudinal", "lateral", "upper", "lower", "front", "rear", "left", "right", "vertical", "horizontal", "top", "bottom", "inner", "outer" and the like are based on the orientations or positional relationships shown in the drawings, which are merely for the convenience of describing the present invention and simplifying the description, and do not indicate or imply that the referred device or element must have a specific orientation, be constructed and operated in a specific orientation, and therefore cannot be understood as a limitation on the present invention.

In the present invention, terms such as "a", "an" or "one" in the claims and the description should be understood as "one or more". That is, in an embodiment, the number of an element may be one, and in another embodiment, the number of the elements may be more than one. Unless the disclosure of the present invention expressly indicates that the number of elements is only one, the term "one" should not be construed as unique or single, and the term "one" should not be construed as limitation of the number.

In the description of the present invention, it should be understood that terms such as "first" and "second" are merely used for description purposes, and cannot be understood as indicating or implying relative importance. In the description of the present invention, it should be noted that unless otherwise specified and defined, terms such as "connected" and "connection" should be understood broadly, for example, may be a fixed connection, or a detachable connection, or an integral connection; may be a mechanical connection, or an electrical connection; may be a direct connection, or an indirect connection through an intermediate medium. For those skilled in the art, specific meanings of the foregoing terms in the present invention may be understood according to specific situations.

In the description of the present description, references to terms such as "an embodiment", "some embodiments", "an example", "specific examples", or "some examples" in the description refer to one or more embodiments or examples of the present invention that include specific features, structures, materials, or characteristics described in conjunction with that embodiment or example. Moreover, the described specific feature, structure, material, or characteristic may be combined in a suitable manner in any one or more embodiments or examples. In addition, those skilled in the art may combine different embodiments or examples described in the present description and combine features of different embodiments or examples without contradictory.

To resolve the issue of vergence-accommodation conflict existing in the waveguide-based augmented reality near-eye display, the present invention provides a light field near-eye display assembly 10. Through the cooperation of MEMS scanning and a spatial light modulator 13, the light field near-eye display assembly 10 can achieve a true three-dimensional light field display effect, which solves the problem in waveguide-based augmented reality technology where the virtual image plane is always at infinity, thereby resolving the vergence-accommodation conflict and eliminating the visual fatigue caused during use. By utilizing a combination of a lighting assembly 11, a MEMS scanning mirror 12, and the spatial light modulator 13 to realize the light field display, the light field near-eye display assembly 10 can provide high-resolution display images, enhancing the realism of the display images. Through the waveguide-based structure, the volume of the light field near-eye display assembly 10 can be reduced, the complex structure of the light field near-eye display assembly 10 can be optimized, and the lightness and thinness of the light field near-eye display assembly 10 can be realized.

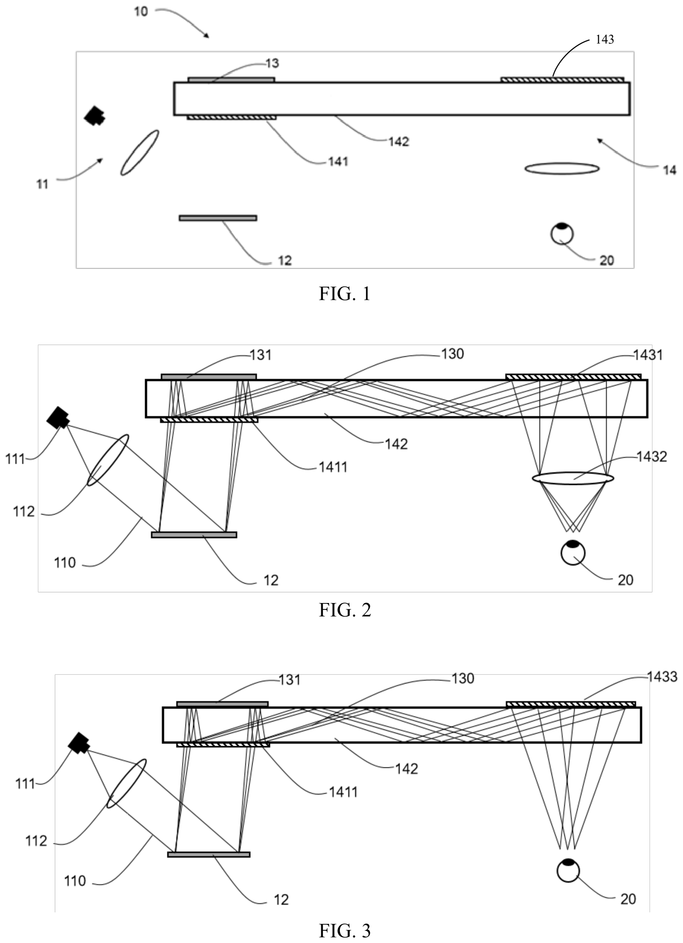

Specifically, referring to FIG. 1 to FIG. 7, the present invention provides a light field near-eye display assembly 10. The light field near-eye display assembly 10 includes a lighting assembly 11, a MEMS scanning mirror 12, a spatial light modulator 13, and a waveguide assembly 14. The lighting assembly 11 is configured to project an illumination beam 110. The illumination beam 110 may include a plurality of parallel illumination beams 110. The MEMS scanning mirror 12 is provided on a projection side of the lighting assembly 11. The MEMS scanning mirror 12 is capable of varying its own reflection angle over time to deflect the illumination beam 110 projected by the lighting assembly 11, thereby adjusting an incident angle of the illumination beam 110. In other words, at different time points, the reflection angle of the MEMS scanning mirror 12 may be continuously refreshed, resulting in varying incident angles of the illumination beam 110 projected to the MEMS scanning mirror 12 at respective time points. The spatial light modulator 13 is provided in a light path between the MEMS scanning mirror 12 and a coupling-in device 141. The spatial light modulator 13 is capable of modulating an output amplitude of incident light modulated by varying angles and refresh time, thereby converting the incident light into image light 130. In other words, when a refresh rate of the spatial light modulator 13 is the same as that of the MEMS scanning mirror 12, the spatial light modulator 13 can modulate the illumination beam 110 deflected by the MEMS scanning mirror 12 into the image light 130 at a corresponding viewing angle and propagate the image light 130 to the waveguide assembly 14. The image light 130 modulated by the spatial light modulator 13 may have a higher resolution, enhancing the realism of a displayed imagery. The waveguide assembly 14 includes an optical waveguide 142, the coupling-in device 141 provided on the optical waveguide 142, and a coupling-out device 143 provided on the optical waveguide 142. The coupling-in device 141 is configured to couple the image light 130 modulated by the spatial light modulator 13 into the optical waveguide 142. The image light 130 propagates to the coupling-out device 143 within the optical waveguide 142 and is coupled out of the optical waveguide 142 through the coupling-out device 143. The propagation of the image light 130 through the waveguide assembly 14 can reduce a volume required by the propagation of the image light 130, optimize a volume of the light field near-eye display assembly 10, and facilitate lightness and thinness of the light field near-eye display assembly 10. In this way, the MEMS scanning mirror 12 and the spatial light modulator 13 can achieve a synchronous refresh rate at a kHz level. Consequently, the image light 130 can form a vast number of convergence viewpoints on a retina of the human eyes 20, creating an approximately continuous three-dimensional light field display effect. This fundamentally solves the problem in the waveguide-based augmented reality technology where the virtual image plane is always at infinity, thereby resolving the vergence-accommodation conflict and eliminating the visual fatigue caused during use.

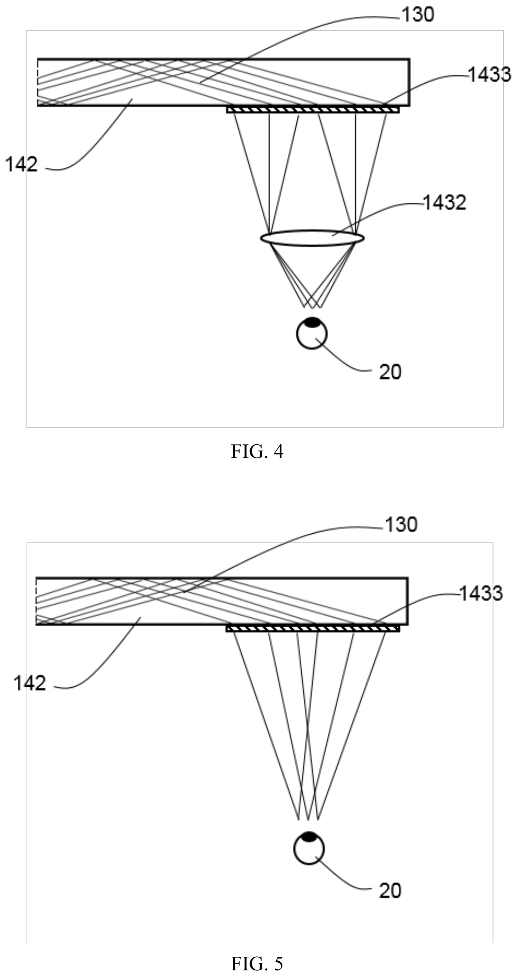

Alternatively, referring to FIG. 2 and FIG. 4, in an embodiment, the coupling-out device 143 may include a coupling-out grating 1431 provided on a side of the optical waveguide 142. The illumination beam 110 emitted from the lighting assembly 11 may be reflected by the MEMS scanning mirror 12 and then be modulated by the spatial light modulator 13 to form the image light 130 of a three-dimensional scene at a corresponding viewing angle. The image light 130 is coupled into the optical waveguide 142 through the coupling-in device 141, propagates into the coupling-out device 143 within the optical waveguide 142, and is then coupled out by the coupling-out grating 1431 to different positions on the retina of the human eyes 20 to achieve three-dimensional light field display. The coupling-out grating 1431 may be implemented as a surface-relief grating, a reflective volume holographic grating, or a reflective liquid crystal polarization grating. The coupling-out grating 1431 may also be implemented as a transmissive volume holographic grating or a transmissive liquid crystal polarization grating.

Alternatively, referring to FIG. 2 and FIG. 4, in an embodiment, the light field near-eye display assembly 10 may further include an eyepiece 1432 provided in a coupling-out light path of the coupling-out grating 1431. The eyepiece 1432 may be configured to deflect the image light 130 coupled out through the coupling-out grating 1431 to adjust a coupling-out distance of the coupling-out grating 1431. This enables the human eyes to receive the image light 130 at different positions, thereby increasing a visible distance of the light field near-eye display assembly 10.

Alternatively, referring to FIG. 3 and FIG. 5, in an embodiment, the coupling-out device 143 may include a coupling-out lens 1433 provided on a side of the optical waveguide 142. The coupling-out lens 1433 may be configured to directly reflect and project the image light 130 propagating within the optical waveguide 142 onto the retina of the human eyes 20 without an additional eyepiece 1432. The outcoupling lens 1433 may include a reflective volume off-axis holographic lens, a reflective off-axis liquid crystal lens, a transmissive volume off-axis holographic lens, or a transmissive off-axis liquid crystal lens.

Alternatively, referring to FIG. 2, in an embodiment, the spatial light modulator 13 may be implemented as a reflective spatial light modulator 131 provided on a side of the optical waveguide 142 distal from the MEMS scanning mirror 12. The reflective spatial light modulator 131 may be configured to modulate the illumination beam 110 reflected by the MEMS scanning mirror 12 into the image light 130 of a three-dimensional scene at a corresponding viewing angle and reflect the image light 130 to the coupling-in device 141.

More alternatively, referring to FIG. 2, in an embodiment of the present invention, the coupling-in device 141 may include a reflective coupling-in grating 1411 provided on a side of the optical waveguide 142 proximal to the MEMS scanning mirror 12. The illumination beam 110 emitted by the lighting assembly 11 can pass through the reflective coupling-in grating 1411 and be projected to the reflective spatial light modulator 131. The reflective spatial light modulator 131 may be configured to modulate the illumination beam 110 into the image light 130 and reflect the image light 130 to the reflective coupling-in grating 1411. The reflective coupling-in grating 1411 may be configured to couple the image light 130 into the optical waveguide 142. The reflective coupling-in grating 1411 may be implemented as a reflective volume holographic grating or a reflective liquid crystal polarization grating.

It should be noted that the reflective spatial light modulator 131 may be implemented as an amplitude-based reflective spatial light modulator. The amplitude-based reflective spatial light modulator may include a plurality of micro reflective mirrors, each of which is capable of altering its angle with refresh time to modulate an output amplitude of the incident light, thereby modulating the incident light into the image light 130. In addition, the reflective spatial light modulator 131 may also be implemented as other types of spatial light modulators, such as a phase-based spatial light modulator or a liquid crystal spatial light modulator.

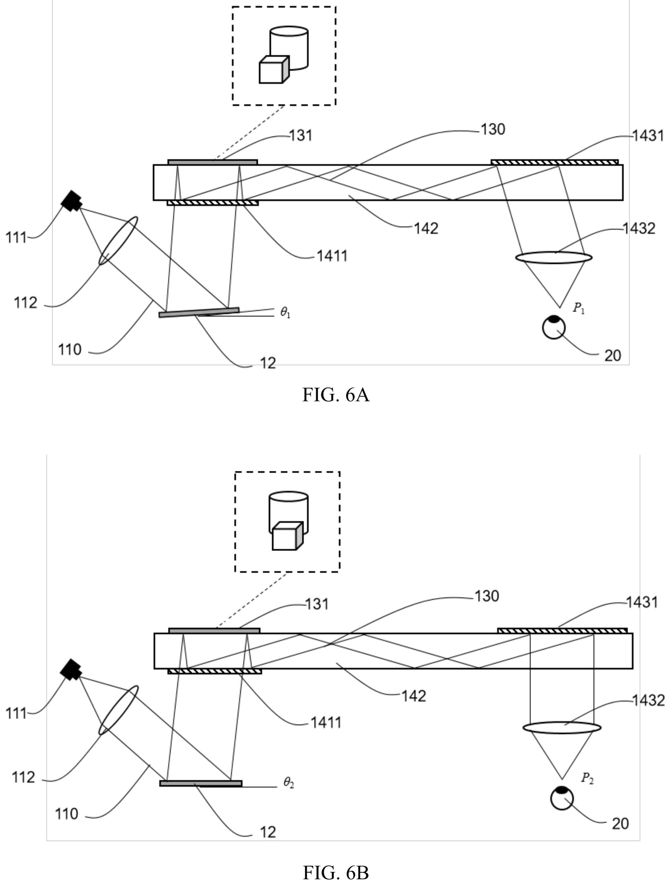

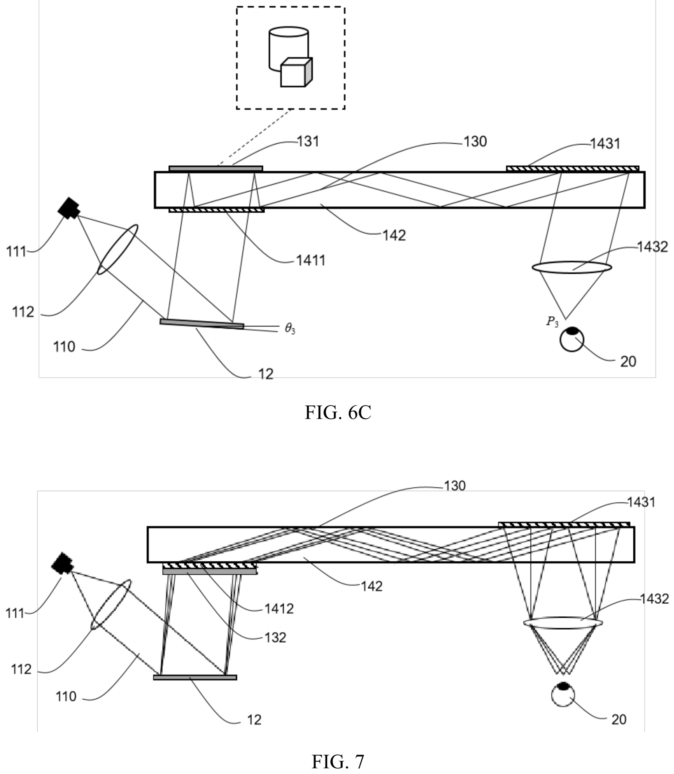

Exemplarily, referring to FIG. 6A, according to a first example of the present invention, at a first time point, the MEMS scanning mirror 12 may have a fixed tilt angle *θ*₁. After being reflected by the MEMS scanning mirror 12, the illumination beam 110 emitted by the lighting assembly 11 may be modulated by the reflective spatial light modulator 131 according to the tilt angle *θ*₁ of the MEMS scanning mirror 12, and first image light 130 of the three-dimensional scene at a first viewing angle corresponding to the tilt angle *θ*₁ may be obtained. This first image light 130 may be then transmitted by the waveguide assembly 14 and projected to *P*₁ of the retina of the human eyes 20.

Referring to FIG. 6B, according to a second example of the present invention, at a second time point, the MEMS scanning mirror 12 may have a fixed tilt angle *θ*₂. After being reflected by the MEMS scanning mirror 12, the illumination beam 110 emitted by the lighting assembly 11 may be modulated by the reflective spatial light modulator 131 according to the tilt angle *θ*₁ of the MEMS scanning mirror 12, and second image light 130 of the three-dimensional scene at a second viewing angle corresponding to the tilt angle *θ*₂ may be obtained. This second image light 130 may be then transmitted by the waveguide assembly 14 and projected to *P*₂ of the retina of the human eyes 20.

Referring to FIG. 6C, according to a third example of the present invention, at a third time point, the MEMS scanning mirror 12 may have a fixed tilt angle *θ*₃. After being reflected by the MEMS scanning mirror 12, the illumination beam 110 emitted by the illumination assembly 11 may be modulated by the reflective spatial light modulator 131 according to the tilt angle *θ*₃ of the MEMS scanning mirror 12, and third image light 130 of the three-dimensional scene at a third viewing angle corresponding to the tilt angle *θ*₃ may be obtained. This third image light 130 may be then transmitted by the waveguide assembly 14 and projected to *P*₃ of the retina of the human eyes 20.

With reference to the above first, second, and third examples of the present invention, the near-eye display assembly is capable of continuously refreshing the tilt angle of the MEMS scanning mirror 12. The spatial light modulator 13 may modulate the illumination beam 110 reflected by the MEMS scanning mirror 12 into the image light 130 of the three-dimensional scene at the corresponding viewing angle. A plurality of convergence points may be formed on the retina of the human eyes 20 by using the waveguide assembly 14, thereby creating an approximately continuous three-dimensional light field display effect, and achieving a true three-dimensional light field display effect.

Furthermore, referring to FIG. 7, in an embodiment, the spatial light modulator 13 may be implemented as a transmissive spatial light modulator 132 provided on a side of the optical waveguide 142 proximal to the MEMS scanning mirror 12. The transmissive spatial light modulator 132 may be configured to modulate the illumination beam 110 reflected by the MEMS scanning mirror 12 into the image light 130 of the three-dimensional scene at a corresponding viewing angle and refracting the image light 130 to the coupling-in device 141. The coupling-in device 141 may be implemented as a transmissive coupling-in grating 1412 provided on a side of the optical waveguide 142 proximal to the MEMS scanning mirror 12. The transmissive coupling-in grating 1412 may be configured to refract and couple the image light 130 refracted by the transmissive spatial light modulator 132 into the optical waveguide 142, so that the image light 130 propagates within the optical waveguide 142. The transmissive coupling-in grating 1412 may include a surface-relief grating, a transmissive volume holographic grating, or a transmissive liquid crystal polarization grating.

In particular, referring to FIG. 2, in an embodiment, the illumination assembly 11 may include a light source 111 and a collimator 112. The light source 111 may be configured to emit the illumination beam 110. The collimator 112 may be provided between the light source 111 and the MEMS scanning mirror 12. The collimator 112 may be configured to collimate the illumination beam 110 emitted by the light source 111, so that the illumination beam 110 may be projected to the MEMS scanning mirror 12 at the same angle. The collimator 112 may be implemented as a collimating lens or other lens with collimating capability.

Alternatively, in an embodiment, the illumination assembly 11 may include a first laser, a second laser, a third laser, a beam combiner, a first collimator, a second collimator, and a third collimator. The first laser may be configured to emit red light. The second laser may be configured to emit green light. The third laser may be configured to emit blue light. The beam combiner may be configured to combine the red light, the green light, and the blue light into a beam of illumination light. The first collimator may be provided in a light path between the first laser and the beam combiner. The second collimator may be provided in a light path between the second laser and the beam combiner. The third collimator may be provided in a light path between the third laser and the beam combiner. The red light emitted by the first laser, the green light emitted by the second laser, and the blue light emitted by the third laser can be collimated by the first collimator, the second collimator, and the third collimator, respectively, and then combined into colored light via the beam combiner to provide colored illumination light for the MEMS.

In conclusion, the present invention provides a light field near-eye display system. The near-eye display system may include a lighting assembly 11, a MEMS scanning mirror 12, a spatial light modulator 13, and a waveguide assembly 14. An illumination beam 110 emitted by the lighting assembly 11 may be projected to the MEMS scanning mirror 12. The reflection angle of the MEMS scanning mirror 12 may be varied over time, causing the illumination beam 110 to exhibit different incident angles at different time points. The spatial light modulator 13 may be configured to modulate the illumination beam 110 into image light 130 of a three-dimensional scene at a viewing angle according to a reflection angle of the MEMS scanning mirror 12 at a corresponding time point. Finally, the waveguide assembly 14 may be configured to project the image light 130 to human eyes 20, so as to implement three-dimensional light field display. Through the cooperation of MEMS scanning and the spatial light modulator 13, the light field near-eye display system may achieve a true three-dimensional light field display effect. This solves the problem in the waveguide-based augmented reality technology where the virtual image plane is always at infinity, thereby resolving the vergence-accommodation conflict and eliminating visual fatigue during use.

According to another aspect of the present invention, a light field near-eye display apparatus is further provided. The light field near-eye display apparatus may include an apparatus body and the light field near-eye display assemblies 10 in any embodiment described above. The light field near-eye display assembly 10 may be mounted on the apparatus body. The light field near-eye display apparatus can achieve a true three-dimensional light field display effect, solving the problem in the waveguide-based augmented reality technology where the virtual image plane is always at infinity. This fundamentally resolves the vergence-accommodation conflict in the light field near-eye display apparatus, thereby eliminating the visual fatigue experienced by users during operation. Through the waveguide-based structure of the light field near-eye display apparatus, the volume of the light field near-eye display assembly 10 is reduced, the complex structure of the light field near-eye display assembly 10 is optimized, and the lightness and thinness of the light field near-eye display assembly 10 is realized.

Furthermore, the present invention further provides a light field near-eye display method. The light field near-eye display method includes the following steps: projecting an illumination beam 110 to a MEMS scanning mirror 12 by a lighting assembly 11; deflecting the illumination beam 110 by using the MEMS scanning mirror 12 to adjust an incident angle of the illumination beam 110; modulating, by using the spatial light modulator 13, the illumination beam 110 deflected by the MEMS scanning mirror 12 to generate image light 130 at a corresponding viewing angle, and projecting the image light 130 to a coupling-in device 141; and coupling the image light 130 into an optical waveguide 142 by using the coupling-in device 141, and transmitting the image light 130 to a coupling-out device 143 by using the optical waveguide 142; and finally coupling the image light 130 out of the optical waveguide 142 by using the coupling-out device 143, and projecting the image light 130 to human eyes 20, to implement three-dimensional light field display. By utilizing a combination of the lighting assembly 11, the MEMS scanning mirror 12, and the spatial light modulator 13 to realize the light field display, the light field near-eye display method can provide high-resolution display images, enhancing the realism of the displayed imagery.

The technical features in the above embodiments may be randomly combined. For concise description, not all possible combinations of the technical features in the embodiments are described. However, all the combinations of the technical features are to be considered as falling within the scope described in this description provided that they do not conflict with each other.

The above embodiments only express several implementations of the present invention, and the description thereof is relatively specific and detailed, but it cannot be interpreted as the limitation to the scope of the present invention. It should be pointed out that for those skilled in the art, various variation and improvement can be made under the premise of not deviating from the concept of the present invention, which all belong to the protection scope of the present invention. Therefore, the protection scope of the present invention shall be subject to the attached claims.

## Claims

1. A light field near-eye display assembly, **characterized by** comprising a lighting assembly, a Micro-Electro-Mechanical System (MEMS) scanning mirror, a waveguide assembly, and a spatial light modulator,
wherein the lighting assembly is configured to project an illumination beam;
the MEMS scanning mirror is provided on a projection side of the lighting assembly and configured to deflect the illumination beam projected by the lighting assembly to adjust an incident angle of the illumination beam;
the waveguide assembly comprises an optical waveguide, and a coupling-in device and a coupling-out device provided on the optical waveguide; and
the spatial light modulator has a same refresh rate as the MEMS scanning mirror, and the spatial light modulator is provided in a light path between the MEMS scanning mirror and the coupling-in device and configured to modulate the illumination beam deflected by the MEMS scanning mirror into image light at a corresponding viewing angle to propagate to the coupling-in device.

2. The light field near-eye display assembly of claim 1, wherein the coupling-out device comprises a coupling-out grating provided on a side of the optical waveguide, and the coupling-out grating comprises a surface-relief grating, a reflective volume holographic grating, a reflective liquid crystal polarization grating, a transmissive volume holographic grating, or a transmissive liquid crystal polarization grating.

3. The light field near-eye display assembly of claim 2, further comprising an eyepiece provided in a coupling-out light path of the coupling-out grating.

4. The light field near-eye display assembly of claim 1, wherein the coupling-out device comprises a coupling-out lens provided on a side of the optical waveguide, and the coupling-out lens comprises a reflective volume off-axis holographic lens, a reflective off-axis liquid crystal lens, a transmissive volume off-axis holographic lens, or a transmissive off-axis liquid crystal lens.

5. The light field near-eye display assembly of any one of claims 1 to 4, wherein the spatial light modulator comprises a reflective spatial light modulator provided on a side of the optical waveguide distal from the MEMS scanning mirror.

6. The light field near-eye display assembly of claim 5, wherein the coupling-in device comprises a reflective coupling-in grating provided on a side of the optical waveguide proximal to the MEMS scanning mirror, and the reflective coupling-in grating comprises a reflective volume holographic grating or a reflective liquid crystal polarization grating.

7. The light field near-eye display assembly of any one of claims 1 to 4, wherein the spatial light modulator comprises a transmissive spatial light modulator provided on a side of the optical waveguide proximal to the MEMS scanning mirror.

8. The light field near-eye display assembly of claim 7, wherein the coupling-in device comprises a transmissive coupling-in grating provided on a side of the optical waveguide proximal to the MEMS scanning mirror, and the transmissive coupling-in grating comprises a surface-relief grating, a transmissive volume holographic grating, or a transmissive liquid crystal polarization grating.

9. The light field near-eye display assembly of claim 1, wherein the lighting assembly comprises a light source and a collimator, the light source is configured to emit the illumination beam, and the collimator is provided between the light source and the MEMS scanning mirror and configured to collimate the illumination beam emitted by the light source.

10. The light field near-eye display assembly of claim 1, wherein the lighting assembly comprises a first laser, a second laser, a third laser, a beam combiner, a first collimator, a second collimator, and a third collimator,
wherein the first laser is configured to emit red light;
the second laser is configured to emit green light;
the third laser is configured to emit blue light;
the beam combiner is configured to combine the red light, the green light, and the blue light into a single illumination beam;
the first collimator is provided in a light path between the first laser and the beam combiner;
the second collimator is provided in a light path between the second laser and the beam combiner; and
the third collimator is provided in a light path between the third laser and the beam combiner.

11. A light field near-eye display apparatus, **characterized by** comprising an apparatus body and the light field near-eye display assembly of any one of claims 1 to 10, wherein the light field near-eye display assembly is mounted on the apparatus body.

12. A light field near-eye display method, **characterized by** comprising:
projecting an illumination beam to a MEMS scanning mirror by a lighting assembly;
deflecting the illumination beam to adjust an incident angle of the illumination beam by the MEMS scanning mirror;
modulating the illumination beam deflected by the MEMS scanning mirror to generate image light at a corresponding viewing angle and projecting the image light to a coupling-in device by a spatial light modulator;
coupling the image light into an optical waveguide by the coupling-in device, and transmitting the image light to a coupling-out device by the optical waveguide; and
coupling the image light out of the optical waveguide and projecting the image light to human eyes by the coupling-out device so as to achieve a three-dimensional light field display.
